# EUROPEAN PATENT SPECIFICATION

(11) **EP 2 659 134 B1**
(45) Date of publication and mention of the grant of the patent: **31.08.2016**
(21) Application number: 11808235.3
(22) Date of filing: 29.12.2011
(51) Int. Cl.: F03D 3/04, F03D 7/06

(54) **WIND TURBINE WITH VERTICAL AXIS**
WINDTURBINE MIT VERTIKALER ACHSE
TURBINE ÉOLIENNE À AXE VERTICAL

(30) Priority: 31.12.2010 BE 201000755
(43) Date of publication of application: 06.11.2013
(73) Proprietor: Dacus, Walter, 9260 Schellebelle (BE); Baetens, Joan, 9260 Schellebelle (BE)
(72) Inventor: Dacus, Walter, 9260 Schellebelle (BE); Baetens, Joan, 9260 Schellebelle (BE)
(74) Representative: Office Kirkpatrick
(86) International application number: PCT/EP2011/074228
(87) International publication number: WO 2012/089806

(56) References cited:
- EP-A1- 1 541 865
- WO-A1-99/04164
- WO-A2-2008/108637
- CA-A1- 1 229 796
- US-A- 237 078

## Description

The invention concerns a turbine to be driven by a fluid, equipped with a rotor with a vertical axis and provided with a fluid guide, where the fluid guide includes a system of screens which moves around the rotor, and provided with a signal means for obtaining a direction signal and a directing means for directing the system of screens, in dependence on the direction signal, by turning the system of screens around the rotor, wherein the rotor comprises, between an upper and a lower platform, a number of rotor blades curved inward, the rotor blades leaving a central section around the vertical axis free.

There exist vertical turbine types, where the axis is oriented vertically, and the usual horizontal type, where the axis is oriented horizontally.

In this description, fluid is used to indicate gasses and liquids. A wind turbine is an example of such a turbine. Turbines may also be driven with liquids. The following description will refer, by way of example, to wind turbines. The usual type of wind turbine is a wind turbine with horizontal axis. The blades (wings) of the wind turbine turn in a vertical plane and the blades are subjected during the rotation to strongly varying forces. The blades do not turn in a constant gravitational field, but the gravitation and centrifugal forces that act upon the blades during a rotation vary.

Vertical wind turbines with a vertical axis are used to a less degree, but are known.

There are different types of wind turbines with vertical axis; one of these types has three or more blades fitted on a central rotating axis. The blades may be curved inwardly. An example of such turbine is known from the UK patent application GB 2,434,703.

Another example of this type of wind turbine is known from the American patent application US2004265116. The latter describes a vertical wind turbine which is fitted with a wind guide in order to direct the wind into the wind turbine.

Another example of this type of wind turbine is described in the first paragraph of CA 1229796. The wind guide includes a system of two screens that move around the rotor, and a directing means for directing the system of screens towards the wind. The rotor blades are fixated between an upper platform and a lower platform, and the rotor blades leave a central section around the vertical axis free. A wind vane serves as a directing means. The force acting on the wind vane is, in this case, the direction signal. WO2008108637 also describes a wind turbine of this type.

There are also wind turbines with a vertical axis of the so-called Darrieus type. These Darrieus wind turbines exist in different versions, of which the most important are:
- a design in which the blades have a shape which makes the wind turbine resemble a dough beater and
- a design in which the blades are oriented vertically at some distance from the axis.

Although these wind turbines are known, the use of wind turbines with vertical axis has never really caught on.

The output of a wind turbine is influenced by a number of factors. One of these is the minimum wind speed at which the wind turbine can produce power. In certain locations in the world, particularly on coasts, the wind blows often and with considerable speed. However, the more we advance inland, the average wind speed decreases rapidly. Many wind turbines are no longer efficient below a certain wind speed. This means that, for low wind speeds, they produce no or almost no power. There is no point in placing wind turbines in such areas. Sometimes the problem is solved by placing the wind turbine higher up, so as to catch more wind. This also has negative consequences, because small-scale projects become impossible and there is serious deterioration of the field of view of residents, which often causes residents to protest vigorously.

The objective is to create a wind turbine with vertical axis which has a higher output, particularly in the case of lower wind speeds.

To this end, the wind turbine according to the invention is characterized in that the rotor blades are provided with an open curl shape at the ends facing the central section.

The rotor blades have an open curl at their tips facing the central section, i.e. a back-folded part, whereby the fold is such that a cavity is formed between the front and the back of the blade. The prior art discloses rotor blades designed as a half arch, which do not form a curl at their tips.

An open curl at the tips provides a significantly better aerodynamic shape, which, particularly in the case of lower wind speeds, leads to a much better output. On the one hand, the open curl provides a useful "push effect" when the blade is positioned at a position where the wind pushes the rotor blades, but, on the other hand, also for a suction effect at other positions, as the open curl shape behaves as a wing.

The system of screens may be directed via a direction signal sent from a direction device. A simple way to obtain a direction signal is via a wind meter. The signal from the wind meter indicates the direction the wind blows in and the system of screens is directed towards the wind. In this case, the direction device includes a wind meter.

An alternative way to obtain a direction signal is feedback from the power output signal. The system is rotated a bit, if the power output increases it is rotated a bit further in that direction, until it passes the optimum position, after which it is moved back to the optimum position. In this case, the direction device includes a way to measure the output as a function of the position of the screens.

Preferably, the screen system consists of two screens placed on the outside of the wind turbine, where the two wind screens are preferably placed as flat screens positioned transverse to each other and lines perpendicularly on both surfaces cross each other on the vertical axis, wherein there is a gap between the screens, and the wind turbine is provided with a means to direct the gap between the wind screens depending on the direction signal sent by the direction device.

Placing two screens significantly increases efficiency as compared to systems with three or more screens. The gap between the screens propels the wind against the blades, and, in addition, the wind also whirls behind the screens, which also has a positive effect. The use of flat plates also has a positive effect as compared to other shapes of plates, such as for example curved.

The wind turbine will preferably contain a number of stacked rotors, where the relative position of the blades is shifted from rotor to rotor.

When the rotors are stacked it is recommended to distribute the blades angularly. The force acting on the rotor varies depending on the position of the blades relative to the system of screens. By varying the position of the blades, the force is distributed better, which leads to an increase in efficiency.

The screens preferably spread over a distance between 50 and 55% of the rotor's diameter. The length of the gap between the screens is preferably between 55 and 75% of the rotor's diameter.

The described designs provide an increased output particularly in the case of low wind speeds. Even in the case of low wind speeds of 1-3 Beaufort the output created is commercially very interesting.

The wind turbine according to the invention preferably has three or more blades.

The diameter of a circle of the area around the vertical axis where there are no blades is preferably between 40 and 45% of the rotor's diameter.

In the case of a relative diameter of this area which is too small, there is little or no positive effect. In the case of a relative diameter which is too large, the blades are too small, which also causes the output to decrease. Tests have shown that there is a maximum of delivered output both with and without the use of screens, where the maximums do not overlap.

The blades have tips in an open curl shape.

The length of the open curl shape is preferably between 10 to 25% of the length of the blade.

In the case of a curl which is too large or too small, the propeller effect decreases.

This and other aspects of the invention are described below and illustrated with the help of drawings.

The drawings illustrate:
Figure 1 a known wind turbine with a vertical axis;
Figure 2 an additional example of a known wind turbine with a vertical axis;
Figures 3A and 3B a wind turbine according to the invention;
Figures 4A and 4B an overview of a wind turbine according to the invention and of a known wind turbine;
Figure 5 a scheme for a wind turbine according to the invention;
Figure 6 a preferred design for a wind turbine according to the invention;
Figure 7 a graph indicating delivered output as a function of the position of the blades;
Figure 8 an embodiment for a wind turbine according to the invention;
Figure 9 a further detail of a rotor blade for a wind turbine according to an embodiment of the invention;

The figures are not always drawn to scale, similar parts are usually indicated with similar reference numbers. Sizes indicated in the illustration are by way of example only and should not be taken as restrictive, unless otherwise indicated.

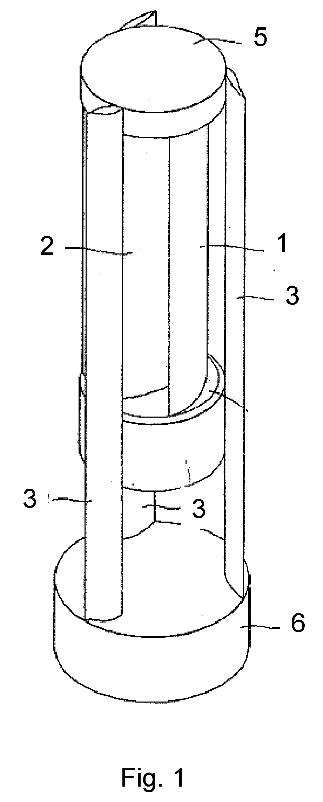

Figure 1 shows a known wind turbine with a vertical axis.

This wind turbine is known from the American patent application US2004265116. Rotor 1 is equipped with blades 2 and fixed wind guides, called "fixed guide fins" in US 2004265166, 3. The rotor has a lower blade 4 and a lower blade 5. The wind guides are fitted on the fixed element 6.

According to US2004265116, this design produces a good output irrespective of the direction in which the wind blows.

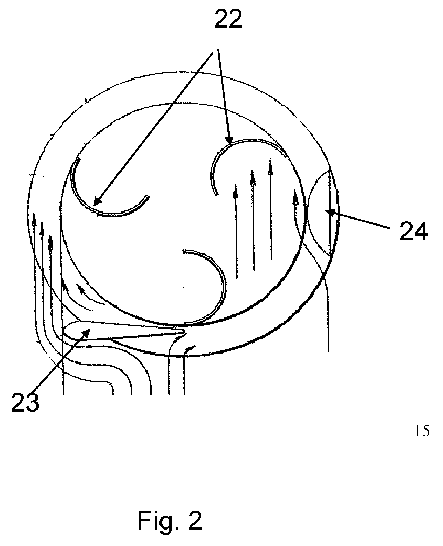

Figure 2 shows a known wind turbine, presented in CA 1229796. In this known wind turbine, the wind guides include two screens 23 and 24. The orientation of the screen system can be adjusted with a wind vane. The orientation of the screens according to the wind has a positive effect on the output.

The inventors have determined that a further improvement is possible.

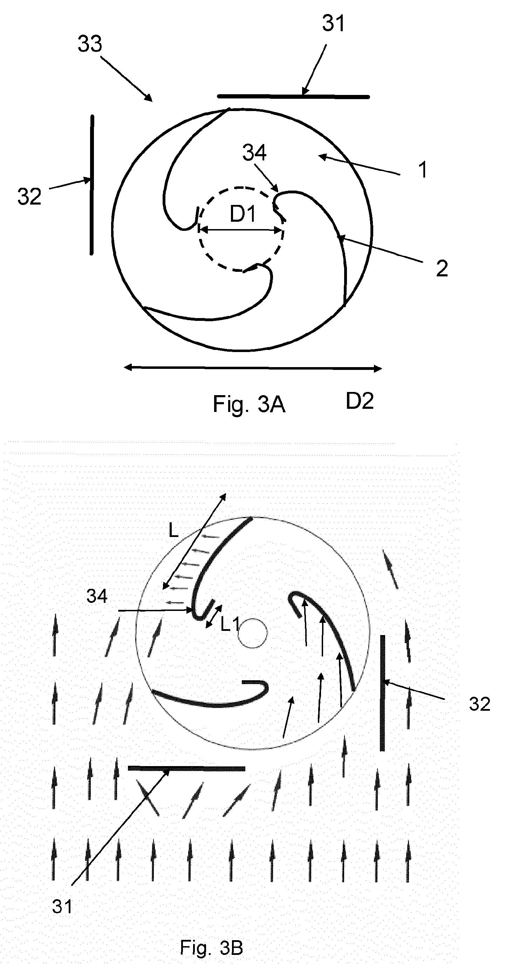

Figure 3A presents a scheme of the invention. Rotor 1 with blades 2 is surrounded by the wind screens system, which in this example consists of wind screens 31 and 32, between which there is a gap 33. The system of wind screens revolves around the rotor axis. The orientation of the wind screen system depends on the direction signal. The direction signal is obtained from, for example, a wind meter. In this example, an area with diameter D1 is preferably left free around the vertical axis. The diameter of the rotor itself is indicated on the scheme with D2. The rotor blades end with the tips curved towards the central section in an open curl 34. In this example, the rotor also includes a vertical axis, but no axis in the sense of a bar in the middle of the rotor. Embodiments may, however, include a central axis. Particularly in embodiments where several rotors are stacked, it is advantageous to provide a central bar which establishes the mechanical connection between the rotors. The curl shape 34 at the tips of the rotor blades which are turned inward towards the central section gives the rotor blades an aerodynamic profile which is similar to an airplane wing, for winds which collide against the closed side of the curl shape.

Figure 3B presents this effect schematically. The curl shape 34, with an external element of size L and turned in element of size L1, works in the aerodynamic sense as a wing. This creates a "suction force" indicated by the arrows perpendicular to the outer surface of the blade. The curl shape 34 extends over the entire length (from the upper to the lower part) of the rotor blades. The curl shape 34 forms a turned in edge where the turned in section is preferably of length L1 which is preferably between 10 to 25%, preferably about 15% of the length L of the external section. The size L1 of the curl is then 10 to 25%, preferably about 15% of the size of the blade. If the curl 34 is longer, then the propelling effect that occurs when the wind hits the internal part of the curl decreases (this effect is schematically shown by the arrows hitting the blade next to screen 32); if the curl 34 is shorter, the aerodynamic profile is less effective and the "suction effect" decreases.

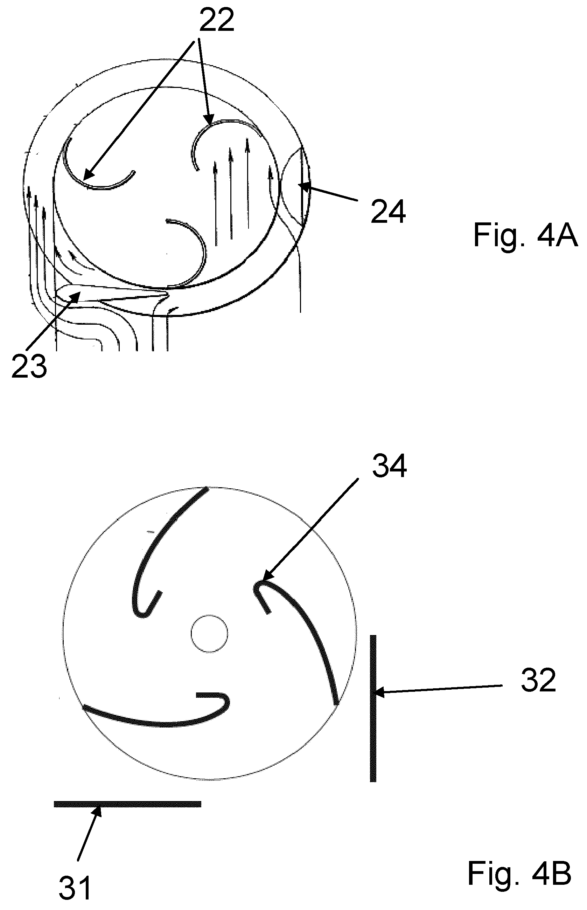

Figures 4A and 4B illustrate the difference between the shapes of the rotor blades and the shapes of the screens, where figure 4A shows the invention and figure 4B the design according to CA1229796.

A comparison between figures 4A and 4B shows that in CA 1229796 the rotor blades are not fitted with an open curl shape 34 on the tips turned inward towards the central section, but rather have the simple shape of an arch. The screens that are used in CA 1229796 are also not in the shape and mounting according to the invention, particularly not where the screen which is not perpendicular on the wind is concerned.

Table 1 below gives the results of tests:

**Table 1.**

| | Rotors CA 1229796, screens CA 1229796 | Rotors invention, screens CA 1229796 | Rotors CA 1229796, screens invention | Rotors invention, screens invention |
|---|---|---|---|---|
| Wind load rating 1 | 10.5 | 14.5 | 12.5 | 15.5 |
| Wind load rating 2 | 1 | 8 | 1 | 9.5 |
| Wind load rating 3 | 0 | 2 | 0 | 3.5 |

In the case of a low wind load rating (wind load rating 3 or 2), the output of the rotor blades according to the invention is significantly higher than that of the rotor blades in CA1229796. The design of the screens also has a clearly positive effect, particularly in the case of higher wind load ratings (wind load rating 1).

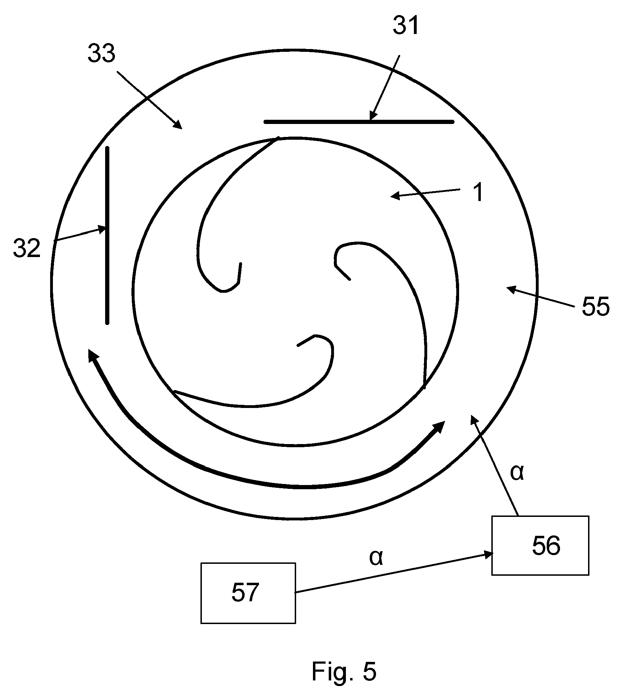

Figure 5 further illustrates the invention.

The rotor is indicated in this figure schematically as a circle. The screen system is oriented, indicated in figure 5 schematically by angle α. For example, screens 31 and 32 are located on a swivel plate 55. This swivel plate 55 is operated by a drive 56. With the help of the drive, the position of the gap between the screens can be modified. This can, for example, be expressed in an angle α relative to a reference point. Angle α is set depending on a direction signal, also indicated with α in figure 5 for simplicity's sake, which is supplied by a direction device 57, for example a wind meter.

A simple way to obtain a direction signal is via a wind meter. The signal from the wind meter indicates the direction the wind blows in and the system of screens is directed towards the wind. In this case, the direction device includes a wind meter.

An alternative way to obtain a direction signal is feedback from the power output signal. The system is rotated a bit; if the power output increases, then the system is rotated a bit further in that direction, until it passes the optimum position, after which it is moved back to it. In this case, the direction device includes a way to measure the output as a function of the position of the screens.

The screen system can therefore be directed based on the wind direction or the direction in which the output is highest. Often, the two directions overlap approximately.

In the preferred embodiment shown in figure 5, the screens system consists of two screens which are placed on the outside of the wind turbine with a gap in between.

Placing two screens significantly increases efficiency as compared to systems with three or more screens. The gap between the screens propels the wind against the blades, and, in addition, the wind also whirls behind the screens, which also has a positive effect.

The two wind screens are preferably placed perpendicular to each other as flat plates and, lines perpendicularly on both surfaces approximately cross each other on the vertical axis.

This design was shown to produce a very high level of efficiency.

Of course, many variations are possible within the framework of the invention.

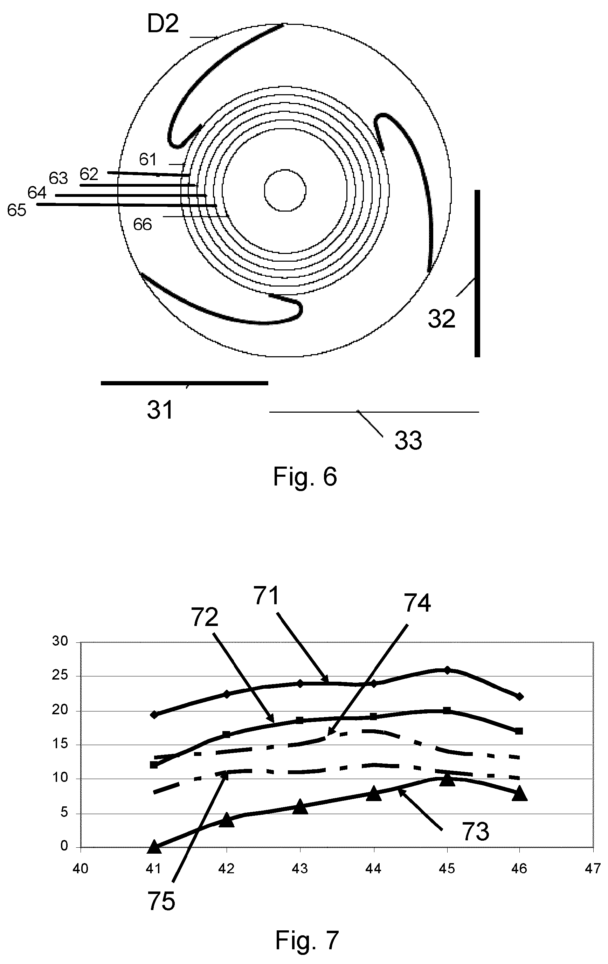

Figure 6 illustrates the preferred embodiment. This embodiment indicates a few preferred dimensions for the screens.

Various positions of the blades are indicated by positions 61, 62, 63, 64, 65 and 67.

For position 61, the circle covers 62.5% of the diameter D2 of the rotor, for position 62 57.5%, for position 63 52.5%, for position 64 47.5%, for position 65 42.5% and, finally, for position 66, 37.5% of the diameter D2.

The length A of the screens is preferably between 45 to 55% of the diameter D2, preferably approximately 50% (more or less 2%) the width B of the gap preferably between 55 and 70%, preferably approximately 62.5% (more or less 2%).

The inventors have determined that the output delivered depends on the ratio between the diameters D1 and D2, both when a screens system is used or not. The optimal level is however different when screens are used.

Table 2 indicates the output delivered with or without a screens system depending on the ratio. This table is shown in figure 5. RPM stands for Rotations Per Minute.

**Table 2:**

| | RPM Rotor with screens | | | RPM Rotor without screens | | |
|---|---|---|---|---|---|---|
| | | | | | | |
| | | | | | | |

| Angle position | Unloaded | Lightly loaded | Heavily loaded | Unloaded | Lightly loaded | Heavily loaded |
|---|---|---|---|---|---|---|
| | | | | | | |
| 61 | 19.5 | 12 | 0 | 13 | 8 | 0 |
| | | | | | | |
| | | | | | | |
| 62 | 22.5 | 16.5 | 4 | 14 | 11 | 0 |
| | | | | | | |
| | | | | | | |
| 63 | 24 | 18.5 | 6 | 15 | 11 | 0 |
| | | | | | | |
| | | | | | | |
| 64 | 24 | 19 | 8 | 17 | 12 | 0 |
| | | | | | | |
| | | | | | | |
| 65 | 26 | 20 | 10 | 14 | 11 | 0 |
| | | | | | | |
| | | | | | | |
| 66 | 22 | 17 | 8 | 13 | 10 | 0 |

It is clear that the screens 31, 32 have a very strong effect. The effect illustrated in table 2 was strongly dependent on the direction of the screens, a deviation of 5-10 degrees from the direction of the wind has a significant effect. Placing several screens, for example three or four, respectively, makes efficiency decrease noticeably.

Figure 7 shows the number of RPM as a function of the position, as indicated in table 2. Line 71 shows the number of RPM with the use of screens unloaded, line 72 with light load, and line 73 with heavy load. Line 74 shows the number of RPM without the use of screens unloaded, and line 75 with light load. There is a maximum in the curves.

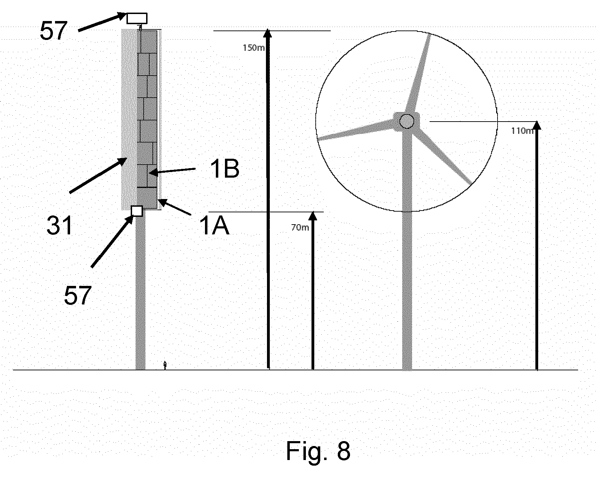

Figure 8 shows an embodiment for a wind turbine according to the invention. On the right side, a standard turbine is drawn for comparison. The wind turbine according to the invention is to be placed in locations where there is no room for a standard wind turbine, such as an urban environment. Strong winds can occur between high buildings. The wind turbine according to the invention is fixated on a pole in this example. It can also be fixated on the wall of a tall building or a cliff.

The wind turbine as shown has stacked rotors 1A, 1B, etc. The wind turbine is equipped with a common revolving system of screens for the stack of rotors. As in the case of earlier embodiments, a direction meter is provided. The direction follows from wind measurements. In the case of a wind turbine of significant length, two or more wind meters may be provided, where, for example, the average of the two measurements is used as signal. In the case of a wind farm, a central wind meter may also be used common to several wind turbines.

Figure 8 shows that the blades of the rotors do not all have the same position, but they differ in position from rotor to rotor. If, for example, there is a stack of two rotors, with three blades (so that the angle between blades in one rotor is 120 degrees), the angle between the blades of two adjacent rotors preferably skips 60 degrees. The force acting on the rotor varies depending on the angle of the blades relative to the system of screens. For three blades, there is a variation with a module of 120 degrees. By placing the second rotor in such a way that this variation is shifted by 60 degrees, the variation in the total force is diminished. For example, in the case of four blades and three rotors, a difference of 360/4*1/3=30 degrees shall always be noticeable in the orientation of the blades of the rotors.

The examples above show wind turbines. This is a preferred embodiment. Also another fluid, such as water, may be used in embodiments for driving the turbine.

In summary, the invention can be described as follows:
A turbine, for example a wind turbine, is equipped with a rotor (1) with a vertical axis and a screens system (31, 32) for guiding wind and fluid to the rotor. The turbine is equipped with a direction device (57) which produces a direction signal, and a means (55, 56) to direct the screens system (31, 32) depending on the direction signal. The rotor blades are fitted on the sides turned towards the axis with an open curl shape 34.

Another way of describing an open curl shape is an edge partly folded back on itself.

Of course, many variations are possible within the framework of the invention. As such, in the case of stacked rotors, the skip of the blades may be regular or irregular. The blades as shown are, seen form a point of view across the blades, straight, that is vertical, not bent blades. However, the blades may show a light bend in the vertical direction forming a part of a helix. Particularly in the case of stacked rotors, the bend may be such that the upper side of a blade in a rotor almost touches the lower side of the blade of the following rotor. For example: five blades, and six rotors, the skip is then 360/(5*6)=12 degrees. Embodiments use blades which show a slight bend from bottom to top of 12 degrees, the blades of the following rotor are then in line with the blades of the rotor below. The result is a set of blades with a helix-like shape over the vertical axis of the stack of rotors.

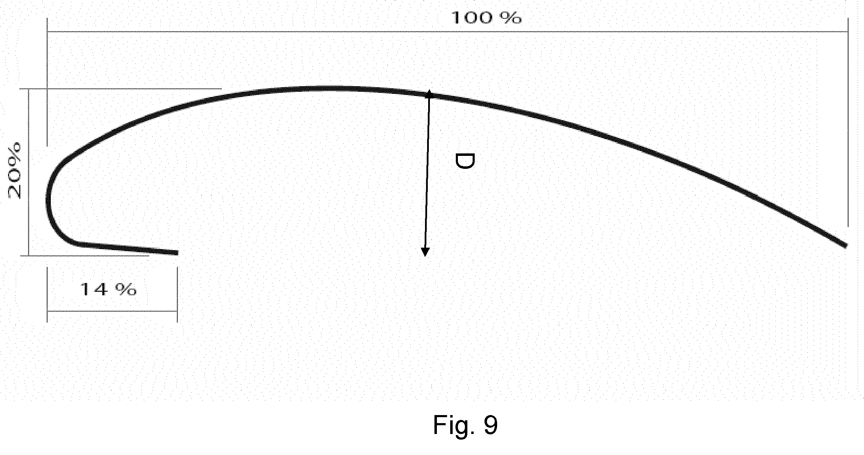

Figure 9 shows in further detail a rotor blade for an embodiment of the wind turbine according to the invention.

The length of the turned in edge is, in this example, approximately 15%, in this example 14% of the length L of the rotor, which is set at 100% in this figure. The thickness of the rotor blade D in this example is 20% of the length L. The thickness D is preferably between 15 and 30%.

## Claims

1. Turbine to be driven by a fluid with a rotor (1) with a vertical axis and provided with a fluid guide, where the guide includes a system of screens (31, 32) which rotates around the rotor, as well as a signal means (57) for obtaining a direction signal and a directing means (56, 55) to direct the system of screens depending on the direction signal by turning the screens system (31, 32) around the rotor (1),
wherein the rotor includes between an upper and a lower platform a number of inwardly bent blades (2), the rotor blades leaving a centrally located section around the vertical axis free, **characterised in that** the rotor blades (2) are provided with an open curl shape (34) at the ends facing the central section.

2. Turbine according to claim 1, **characterised in that** the length (L1) of the open curl shape (34) is between 10 and 25% of the length (L) of the rotor blade.

3. Turbine according to claims 1 or 2, **characterised in that** the turbine is a wind turbine.

4. Turbine according to claim 3, **characterised in that** the direction device includes a wind meter.

5. Turbine according to one of the previous claims, **characterised in that** the system of screens consists of two screens (31, 32) which are placed on the outside of the wind turbine, with a gap (33) between the screens, and the turbine is provided with a means to direct the gap between the wind screens depending on the direction signal from the direction device.

6. Turbine according to claim 5, **characterised in that** the two wind screens are placed approximately perpendicular to each other and lines perpendicularly on both surfaces cross each other on the vertical axis.

7. Turbine according to claim 6, **characterised in that** the screens extend over a distance between 50 and 55% of the rotor'diameter.

8. Turbine according to claim 6, **characterised in that** the length of the gap between the screen is between 55 and 70% of the rotor's diameter.

9. Turbine according to one of the claims 5 to 8, **characterised in that** the diameter (D1) of a circle of the area around the vertical axis where there are no blades is located between 40 and 45% of the rotor'diameter (D2).

## Patentansprüche

1. Durch ein Fluid anzutreibende Turbine mit einem Rotor (1) mit einer vertikalen Achse und mit einer Fluidführung versehen, wobei die Führung ein System von Blenden (31, 32), das sich um den Rotor herum dreht, sowie Signalmittel (57) zum Erhalten eines Richtungssignals und ein Lenkungsmittel (56, 55) zum Lenken des Systems von Blenden in Abhängigkeit von dem Richtungssignal durch Drehen des Blendensystems (31, 32) um den Rotor (1) herum beinhaltet,
wobei der Rotor eine Reihe von nach innen gebogenen Schaufeln (2) zwischen einer oberen und einer unteren Plattform beinhaltet, wobei die Rotorschaufeln einen sich zentral befindlichen Abschnitt um die vertikale Achse herum frei lassen, **dadurch gekennzeichnet, dass** die Rotorschaufeln (2) mit einer offenen Kringelform (34) an den Enden versehen ist, die dem zentralen Abschnitt zugewandt ist.

2. Turbine nach Anspruch 1, **dadurch gekennzeichnet, dass** die Länge (L1) der offenen Kringelform (34) zwischen 10 und 25 % der Länge (L) der Rotorschaufel ausmacht.

3. Turbine nach Anspruch 1 oder 2, **dadurch gekennzeichnet, dass** die Turbine eine Windturbine ist.

4. Turbine nach Anspruch 3, **dadurch gekennzeichnet, dass** die Richtungsvorrichtung einen Windmesser beinhaltet.

5. Turbine nach einem der vorherigen Ansprüche, **dadurch gekennzeichnet, dass** das System von Blenden aus zwei Blenden (31, 32) besteht, die auf der Außenseite der Windturbine mit einem Spalt (33) zwischen den Blenden angeordnet sind, und die Turbine mit einem Mittel zum Lenken des Spalts zwischen den Windblenden in Abhängigkeit von dem Richtungssignal von der Richtungsvorrichtung versehen ist.

6. Turbine nach Anspruch 5, **dadurch gekennzeichnet, dass** die zwei Windblenden ungefähr lotrecht zueinander angeordnet sind und lotrechte Linien auf beiden Oberflächen einander auf der vertikalen Achse schneiden.

7. Turbine nach Anspruch 6, **dadurch gekennzeichnet, dass** die Blenden sich über einen Abstand zwischen 50 und 55 % des Durchmessers des Rotors erstrecken.

8. Turbine nach Anspruch 6, **dadurch gekennzeichnet, dass** die Länge des Spalts zwischen der Blende zwischen 55 und 70 % des Durchmessers des Rotors beträgt.

9. Turbine nach einem der Ansprüche 5 bis 8, **dadurch gekennzeichnet, dass** der Durchmesser (D1) eines Kreises des Bereichs um die vertikale Achse herum, wo keine Schaufeln sind, zwischen 40 und 45 % des Durchmessers (D2) des Rotors liegt.

## Revendications

1. Turbine destinée à être entraînée par un fluide avec un rotor (1) ayant un axe vertical et comprenant un guide de fluide, le guide comprenant un système d'écrans (31, 32) qui tourne autour du rotor, ainsi qu'un moyen de signal (57) pour obtenir un signal de direction et un moyen de direction (56, 55) pour diriger le système d'écrans en fonction du signal de direction par rotation du système d'écrans (31, 32) autour du rotor (1), le rotor comprenant, entre une plate-forme supérieure et une plate-forme inférieure, un nombre de pales courbées vers l'intérieur (2), les pales de rotor laissant libre une section située de manière centrale autour de l'axe vertical, **caractérisée par le fait que** les pales de rotor (2) ont une forme d'enroulement ouverte (34) à leurs extrémités tournées vers la section centrale.

2. Turbine selon la revendication 1, **caractérisée par le fait que** la longueur (L1) de la forme d'enroulement ouverte (34) est entre 10 et 25 % de la longueur (L) de la pale de rotor.

3. Turbine selon les revendications 1 ou 2, **caractérisée par le fait que** la turbine est une turbine éolienne.

4. Turbine selon la revendication 3, **caractérisée par le fait que** le dispositif de direction comprend un anémomètre.

5. Turbine selon l'une des revendications précédentes, **caractérisée par le fait que** le système d'écrans comprend deux écrans (31, 32) qui sont placés sur l'extérieur de la turbine éolienne, avec un intervalle (33) entre les écrans, et la turbine comporte un moyen pour diriger l'intervalle entre les écrans à vent en fonction du signal de direction provenant du dispositif de direction.

6. Turbine selon la revendication 5, **caractérisée par le fait que** les deux écrans à vent sont placés approximativement perpendiculairement l'un à l'autre et des lignes perpendiculairement sur les deux surfaces se coupent l'une l'autre sur l'axe vertical.

7. Turbine selon la revendication 6, **caractérisée par le fait que** les écrans s'étendent sur une distance entre 50 et 55 % du diamètre du rotor.

8. Turbine selon la revendication 6, **caractérisée par le fait que** la longueur de l'intervalle entre l'écran est entre 55 et 70 % du diamètre du rotor.

9. Turbine selon l'une des revendications 5 à 8, **caractérisée par le fait que** le diamètre (D1) d'un cercle de la région autour de l'axe vertical où il n'y a aucune pale est situé entre 40 et 45 % du diamètre (D2) du rotor.
